Europäisches Patentamt

European Patent Office

Office européen des brevets

(11) Publication number: **0 229 528 B1**

# EUROPEAN PATENT SPECIFICATION

(45) Date of publication of patent specification: **22.07.92**

(51) Int. Cl.⁵: **B65H 18/02**, B65H 18/10, B65H 18/04, B65H 18/16, A44B 18/00

(21) Application number: **86310188.7**

(22) Date of filing: **29.12.86**

(54) **Mobile apparatus for reeling surface type fastener tapes or like elongate strips of flexible material.**

(30) Priority: **28.12.85 JP 298078/85**

(43) Date of publication of application:
**22.07.87 Bulletin 87/30**

(45) Publication of the grant of the patent:
**22.07.92 Bulletin 92/30**

(84) Designated Contracting States:
**DE FR GB IT**

(56) References cited:
**EP-A- 0 092 077**
**US-A- 4 030 678**

(73) Proprietor: **YOSHIDA KOGYO K.K.**
**No. 1 Kanda Izumi-cho Chiyoda-ku**
**Tokyo(JP)**

(72) Inventor: **Murasaki, Ryuichi**
**244-5, Urada Tateyama-machi**
**Nakaniikawa-gun Toyama-ken(JP)**

(74) Representative: **White, Martin David et al**
**MARKS & CLERK 57/60 Lincoln's Inn Fields**
**London WC2A 3LS(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

This invention relates to apparatus for winding on a reel or reels any such elongate strips of flexible material as surface type fastener tapes, slide fastener chains, clothing tapes, belts, etc. More specifically, the invention pertains to such reeling apparatus which may include a carriage such as a handcart on which a desired strip or strips can be reeled, thereby expediting the transportation of the reeled strip or strips from one processing station to another during the manufacture of desired products from the strip or strips.

The surface type fastener is known which comprises one fastener member having a mulplicity of hooks on a piece of carrier fabric, and another fastener member having a multiplicity of loops on another piece of carrier fabric. When pressed against each other, the two fastener members fasten together as a result of the interengagement of the hooks and loops. The hooks and loops are disengageable when the fastener members are forced apart. In the manufacture of such surface type fasteners, fastener tapes are prepared which are elongate strips of carrier fabric each having hooks or loops on its front side. The rear sides of these fastener tapes must be coated with a fluid material that, on being set thermally, can provide a positive anchorage for the hooks or loops onto the carrier fabric against the possibility of detachment in use. After the thermal setting of the coatings, the fastener tapes are reeled for transportation to a cutting station, where the tapes are cut into required lengths.

The usual conventional practice in the fastener industry has been to wind the fastener tapes, which have had their coatings thermally cured, on reels and then to load these reels on any carriage or conveyor means for transportation to the cutting station. As far as the applicant is aware, no means have so far been available for reeling the fastener tapes directly on the carriage or conveyor means.

EP-A-092 077, upon which the preamble of claim 1 is based, discloses an apparatus for reeling flexible elongate strip material, comprising:-

(a) a reel assembly comprising at least one reel rotatably mounted on a support and adapted and arranged for the strip material to be wound thereon;

(b) a driving and braking mechanism disposed in a predetermined location for imparting rotation to the at least one reel in order to cause the strip material to be wound thereon, and for arresting the rotation of the at least one reel upon completion of the winding of the strip material thereon.

However, the support for the reel in EP-A-092 077 is not a carriage and is not able to transport the reel from place to place. The reel is held by the support itself in position in relation to the driving and braking mechanism.

### SUMMARY OF THE INVENTION

The present invention provides an apparatus which is characterised by the features of the characteristic part of claim 1.

The above and other features and advantages of this invention and the manner of realizing them will become more apparent, and the invention itself will best be understood, from a study of the following description and appended claims, with reference had to the attached drawings showing a preferred embodiment of the invention.

### BRIEF DESCRIPTION OF THE DRAWINGS

FIG. 1 is a perspective view, with parts shown broken away to reveal other parts, of a mobile apparatus for simultaneously reeling a plurality of elongate strips of flexible material in accordance with the invention;

FIG. 2 is an elevation, partly shown broken away and partly sectioned for clarity, of the carriage, together with the reel assembly mounted thereon, of the apparatus of FIG. 1;

FIG. 3 is an enlarged, fragmentary top plan, with parts shown broken away to reveal other parts, of the driving and braking mechanism of the apparatus of FIG. 1, with the driving and braking mechanism being shown conditioned for driving a reel of the reel assembly;

FIG. 4 is a view similar to FIG. 3 except that the driving and braking mechanism is shown conditioned for braking the reel; and

FIG. 5 is an enlarged top plan, with a part shown broken away to reveal other parts, of the locking mechanism of the appartus of FIG. 1.

### DESCRIPTION OF THE PREFERRED EMBODIMENT

General

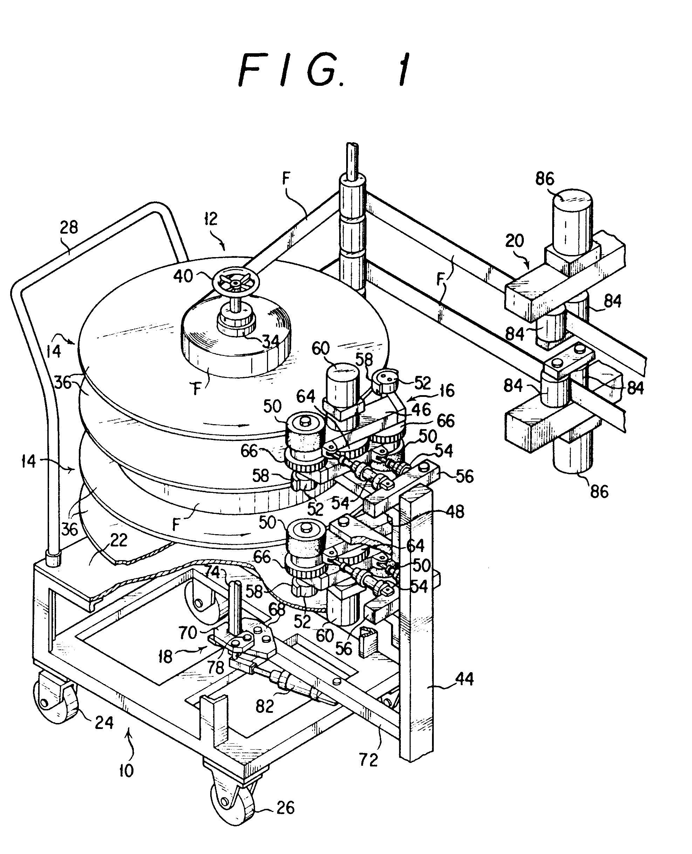

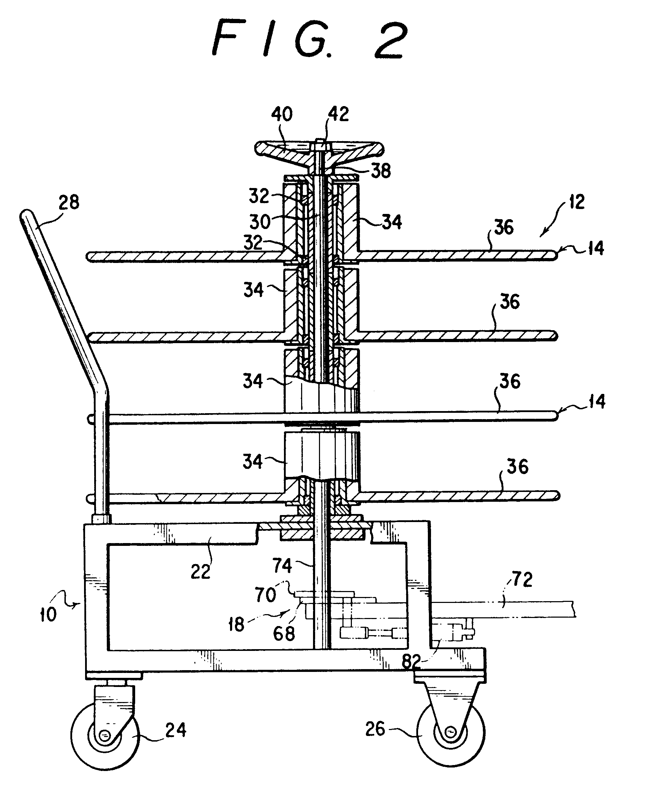

The apparatus of this invention will now be described in detail as adapted for reeling a plurality of surface type fastener tapes that have had their coatings cured thermally, preparatory to transportation to a cutting station where the tapes are to be cut into required lengths. At 10 in FIGS. 1 and 2 is shown a carriage such as a handcart for the conveyance of the reeled fastener tapes F from one processing station to the next. The handcart 10 has mounted thereon a reel assembly 12 comprising a plurality of, four in this particular embodiment, reels 14 coaxially stacked one on top of another for winding the fastener tapes F.

FIG. 1 further shows a driving and braking mechanism 16 disposed in a preassigned position where the fastener tapes F are to be wound on the reels 14 on the handcart 10. As the name implies, the driving and braking mechanism 16 serves the dual purpose of individually driving the reels 14 for winding the fastener tapes F thereon and, upon completion of the winding, of arresting the rotation of the reels.

A locking mechanism seen at 18 in both FIGS. 1 and 2 functions to hold the handcart 10 against displacement with respect to the driving and braking mechanism 16 during the reeling of the fastener tapes F. A feed mechanism 20, FIG. 1, is effective to feed the fastener tapes F toward the reels 14 so as to prevent the exertion of any great tension on the fastener tapes as they are reeled.

Given hereunder is a more extensive discussion of the above noted carriage or handcart 10, reel assembly 12, driving and braking mechanism 16, locking mechanism 18, and feed mechanism 20, in that order, under the respective headings. The operational description of the complete apparatus will follow the discussion of the listed components.

## Carriage

As will be seen from both FIGS. 1 and 2, the carriage or handcart 10 includes a generally boxlike frame 22 having two pairs of wheels 24 and 26 on its underside. Preferably, and as shown, the first pair of wheels 24 are casters capable of swiveling about an axis perpendicular to the wheel axis. Formed on one end of the frame 22, an inverted U shaped handle 28 is to be gripped in moving the handcart 10 between the desired locations. The frame 22 has also rigidly mounted thereon an upstanding shaft 30 which mostly extends upwardly therefrom. The upstanding shaft 30 serves to rotatably support the reels 14 of the reel assembly 12 to be detailed subsequently.

## Reel Assembly

As shown also in FIGS. 1 and 2, the four reels 14 of the reel assembly 12 are all mounted on the upstanding shaft 30, each via a pair of bearings 32, for rotation independently of one another. Being capable of independent rotation, the reels 14 may be driven either successively or altogether. Thus, for instance, the fastener tapes F may be wound on the successive reels 14, from the lowermost one upward, or simultaneously on two, three or all of the reels.

Each reel 14 comprises a core portion 34 in the form of a hollow cylinder, which is sleeved upon the upstanding shaft 30 via the bearings 32, and a disklike flange 36 formed on the bottom end of the core portion 34. As required or desired, each reel 14 may be provided with another flange on the other end of the core portion 34, not shown.

The upstanding shaft 30 has a threaded upward extension 38 protruding from the topmost reel 14. A wheellike retainer 40 is mounted on this upward shaft extension 38 for holding the reels 14 against detachment from the shaft 38. The retainer 40 is itself held in position by an overlying nut 42 in threaded engagement with the shaft extension 38.

## Driving and Braking Mechanism

An inspection of FIG. 1 will reveal that the driving and braking mechanism 16 comprises four sets of driving and braking means, all supported by an upright standard 44, for individually driving and braking the four reels 14 of this particular embodiment. As will be readily understood, however, only one set of driving and braking means, movable up and down with respect to the standard 44, could be provided if only one reel is to be driven and braked at one time.

The four illustrated sets of driving and braking means can be essentially identical in construction. Only one set of such means will therefore be described in detail, it being understood that the same description substantially applies to each of the other sets.

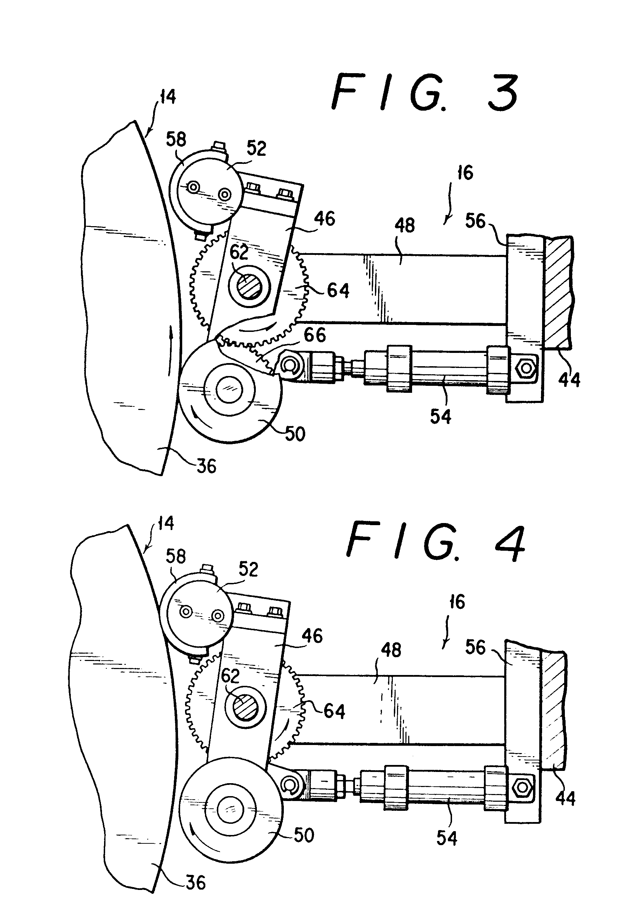

As illustrated on an enlarged scale in FIGS. 3 and 4, the representative set of driving and braking means comprises a carrier arm 46 pivoted at a midpoint thereof on the distal end of a bracket 48 proximally secured to the standard 44. Thus the carrier arm 46 is capable of oscillation, or bidirectional swinging motion, on the bracket 48 about an axis parallel to the common axis of the reels 14. Mounted on the opposite ends of the carrier arm 46 are a drive roll 50 and a brake 52 for driving and braking, respectively, the associated reel 14 via its flange 36.

For bidirectionally swinging the carrier arm 46, a linear actuator 54 is operatively coupled at one end to the carrier arm and at the other end to a cross arm 56 rigidly mounted on the bracket 48. The actuator 54 is herein shown as an air cylinder, althrough it could be a hydraulic cylinder or a solenoid depending upon each intended application of the apparatus. The extension of the air cylinder 54 results in the swinging of the carrier arm 46 in a clockwise direction, as viewed in FIG. 3, with the result that the drive roll 50 is urged into driving contact with the periphery of the reel flange 36 for driving the associated reel 14 in the arrow marked direction. Upon contraction of the air cylinder 54, the carrier arm 46 is swung in a counterclockwise direction, with the result that the drive roll 50 is moved out of contact with the reel flange 36 and, instead, the brake 52 is forced into braking contact therewith, as illustrated in FIG. 4.

Preferably, the drive roll 50 should be covered with a sleeve of rubber or like material capable of offering high frictional resistance to the rotation of the reel 14. Being moved into and out of frictional contact with the reel flange 36, the drive roll 50 can be in constant rotation during the operation of this apparatus. The reel 14 will then be set into rotation immediately upon movement of the drive roll 50 into frictional contact with its flange 36.

The brake 52 can take the form of a short, upstanding cylinder fixedly mounted on the carrier arm 46 and having a high-friction facing 58 for direct contact with the periphery of the reel flange 36. The facing 58 can be of any such material as rubber, leather, or antifriction fabric and should be replaceably attached to the cylinder as by screws.

The driving and braking mechanism 16 further comprises drive means for independently imparting rotation to each drive roll 50. The drive means include an electric drive motor 60, FIG. 1, mounted upstandingly on each carrier arm 46. The drive motor 60 has an output shaft 62, FIGS. 3 and 4, rotatably extending downwardly through the carrier arm 46 and rigidly coupled to a drive gear 64. This drive gear is in mesh with a driven gear 66 which in turn is coupled to the drive roll 50 for joint rotation therewith. Thus the rotation of the drive motor 60 is transmitted to the drive roll 50 via the intermeshing gears 64 and 66. Of course, a belt or chain drive could be employed instead of the exemplified gear drive for driving the drive roll 50.

The drive motor 60 in use in this particular embodiment of the invention must be capable of controllably varying the revolving speed of the associated reel 14 with a change in the diameter of the winding of the fastener tape F on the reel. The fastener tape F must be fed at a constant speed through the heat setting station where the coating on the tape is cured. Should the reel 14 be driven at a constant peripheral speed, the fastener tape F would be wound thereon at a progressively higher speed with an increasing diameter of the tape winding on the reel. Accordingly, in order to permit the fastener tape to be fed through the heat setting station at a constant speed, the reel must be driven at a gradually decreasing speed with an increase in the diameter of the tape winding on the reel. A pulse motor or even a hydraulic motor might therefore be employed only if it can control the revolving speed of the reel as in the foregoing.

Locking Mechanism

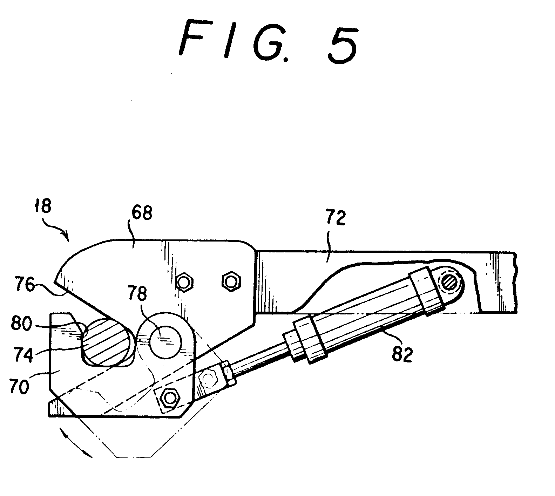

The locking mechanism 18 is shown in both FIGS. 1 and 2 and on an enlarged scale in FIG. 5. It comprises a fixed gripping jaw 68 and movable gripping jaw 70 which are built on the distal end of a cantilever 72 affixed to the upstanding standard 44. When the handcart 10 is held in place with respect to the driving and braking mechanism 16 as shown in FIG. 1, the cantilever 72 projects into the hollow frame 22 of the handcart. The upstanding shaft 30 erected on the handcart frame 22 has a downward extension 74 to be gripped by the pair of gripping jaws 68 and 70.

Rigidly fastened to the cantilever 72, the fixed gripping jaw 68 has a V shaped notch 76 for receiving the shaft extension 74. The movable gripping jaw 70 is pin jointed at 78 to the fixed gripping jaw 68 for pivotal motion relative to the same about an parallel to the axis of the upstanding shaft 30. Generally U shaped, the movable gripping jaw 70 has a recess 80 for positive engagement with the shaft extension 74 when the latter is received in the deepest part of the notch 76 of the fixed gripping jaw 68.

Also included in the locking mechanism 18 is a linear actuator such as a fluid actuated cylinder 82, preferably pneumatic, operatively coupled between the movable gripping jaw 70 and the cantilever 72. The shaft extension 74 is gripped by the pair of gripping jaws 68 and 70 upon extension of the fluid actuated cylinder 82, as indicated by the solid lines in FIG. 5. With the shaft extension 74 thus locked by the locking mechanism 18, the handcart 10 (or at least the axis of the stacked reels 14) can be restrained from displacement relative to the driving and braking mechanism 16 during the reeling of the fastener tapes F. The fluid actuated cylinder 82 may be contracted upon completion of the reeling operation. The movable gripping jaw 70 will then pivot away from the fixed gripping jaw 68, as indicated by the dashed lines in FIG. 5, thereby unlocking the shaft extension 74.

All that must be done by the locking mechanism 18 is to lock the handcart 10, or at least the fixed shaft 30 thereon, against displacement with respect to the driving and braking mechanism 16 during the reeling of the fastener tapes F. It is therefore envisaged within the scope of this invention to attain the same objective by, for example, braking the wheels 24 and 26 of the handcart 10 or by firmly holding the handcart itself, instead of by gripping the extension 74 of the fixed shaft 30 as in the illustrated embodiment.

Feed Mechanism

As illustrated in FIG. 1, the feed mechanism 20 comprises a pair of feed rolls 84 disposed on both sides of a predetermined path of each fastener tape F from the heat setting station to the reeling apparatus of this invention. One of each pair of feed rolls 84 is coupled directly to a drive motor 86 to be driven thereby. Passing between the pair of feed rolls 84, each fastener tape F is frictionally fed toward the reeling apparatus at a constant speed in conformity with the rate at which the fastener tape is wound on one of the reels 14.

Were it not for the feed mechanism 20, each fastener tape F would be tensioned on being wound on one of the reels 14 by its forced rotation by the drive roll 50. The fastener tape would then be coiled so tightly on the reel that its protuberant elements such as loops or hooks might be distorted, thereby impairing the quality of the end products. This possibility can be precluded by forcibly feeding each fastener tape F by the feed mechanism 20 so as to avoid the exertion of any undesired degree of tension on the fastener tape being reeled.

Operation

In the use of the reeling apparatus constructed as in the foregoing, the handcart 10 with the four empty reels 14 may be moved over to the preassigned position with respect to the driving and braking mechanism 16. It is understood that the air cylinder 82 of the gripping mechanism 18 is now contracted, holding the movable gripping jaw 70 away from the fixed gripping jaw 68. The handcart 10 may be so positioned that the downward extension 74 of the fixed shaft 30 thereon is received in the notch 76 in the fixed gripping jaw 68 of the locking mechanism 18. Then the air cylinder 82 may be extended for gripping the shaft extension 74 between the pair of gripping jaws 68 and 70. Now the reel assembly 12 has its axis locked against displacement relative to the driving and braking mechanism 16.

If two fastener tapes F are to be reeled at one time as shown in FIG. 1, the extremities of these tapes may be anchored to the cylindrical cores 34 of two reels 14 in any convenient manner. Then the air cylinders 54 of the driving and braking means associated with the two selected reels 14 may be extended to pivot the carrier arms 46 in the direction for moving the drive rolls 50 into driving contact with the peripheries of the reel flanges 36, as illustrated in FIG. 3. The brakes 52 on these carrier arms 46 will then move out of contact with the reel flanges 36.

If the drive rolls 50 have already been set into rotation by the associated drive motors 60, the two desired reels 14 will start rotation immediately upon forced contact of these drive rolls with their flanges 36. The fastener tapes F will be wound on the reels 14 at a constant rate as the drive motor 60 drives them at a progressively decreasing speed.

Upon full loading of the reels 14 with the fastener tapes F, the air cylinders 54 may be contracted to move the drive rolls 50 out of contact with the reel flanges 36, as shown in FIG. 4. Almost concurrently with the movement of the drive rolls 50 away from the reel flanges 36, the brakes 52 will make frictional contact therewith thereby immediately arresting the rotation of the reels 14.

Then the fastener tapes F may be coiled on two other reels 14 by the repetition of the foregoing procedure.

If the reels 14 were not braked immediately upon completion of the winding, the coiled fastener tapes might be partly unwound or loosened through the inertial rotation of the reels, since the end portions of the fastener tapes might be flung out centrifugally. Such partial unwinding or loosening of the coiled tapes would make difficult the subsequent transportation and handling of the reels. The present invention overcomes the difficulties by immediately braking the reels 14 upon completion of the winding.

While the apparatus in accordance with the invention has been hereinbefore disclosed as adapted specifically for reeling surface type fastener tapes, such disclosure merely represents one possible application of the invention as many other applications and adaptations are possible within the scope of this invention. Also, various changes may be made in the details of the above disclosed embodiment without departing from the scope of the invention. For instance, the reel assembly 12 may be mounted not on the handcart 10 but on any other form of carriage such as that suspended from, and movable along, overhead railing.

**Claims**

1. An apparatus for reeling flexible elongate strip material (F), comprising:-

   (a) a reel assembly (12) comprising at least one reel (14) rotatably mounted on a support (10) and adapted and arranged for the strip material (F) to be wound thereon;

   (b) a driving and braking mechanism (16) disposed in a predetermined location for imparting rotation to the at least one reel (14) in order to cause the strip material (F) to be wound thereon, and for arresting the rotation of the at least one reel (14) upon completion of the winding of the strip material (F) thereon;

   characterised in that:-

(c) said at least one reel (14) of said reel assembly (12) comprises a plurality of said reels (14) mounted coaxially in a stack on a shaft (30) which is fixed to said support (10);

(d) said support (10) is in the form of a carriage adapted to be moved around for transporting the reels (14) from one place to another place; and

(e) the apparatus comprises a locking mechanism (18) for lockingly engaging said shaft (30) so as to hold the shaft (30) in a predetermined position in relation to the driving and braking mechanism (16) for the winding of the strip material (F) on said reels (14), the locking mechanism (18) being releasable for the carriage to be moved to another location, away from the driving and braking mechanism (16).

2.  A reeling apparatus as claimed in Claim 1, wherein each of said reels (14) comprises a cylindrical core (34) mounted on the carriage for independent rotation, and at least one flange (36) formed on the cylindrical core (34) for joint rotation therewith, and wherein said driving and braking mechanism (16) comprises:

(a) fixed support means (44);

(b) a plurality of carrier arms (46) each medially pivoted on the support means (44) for oscillation about an axis parallel to the axis of the reels (14);

(c) a respective drive roll (50) mounted on one end of each carrier arm (46) for rotation about an axis parallel to the axis of the reels (14), each drive roll (50) being movable into and out of driving engagement with the periphery of the flange (36) of one respective reel (14) with the oscillation of the associated carrier arm (46);

(d) drive means (60,62,64,66) for imparting rotation to each drive roll (50);

(e) a respective brake (52) mounted on the other end of each carrier arm (46) for movement into and out of braking engagement with the periphery of the flange (36) of one respective reel (14) with the oscillation of the associated carrier arm (46); and

(f) an actuator (82) for oscillating each carrier arm (46) with respect to the support means (44) in order to move the drive roll (50) and the brake (52) on each carrier arm (46) into and out of driving and braking engagement, respectively, with the flange (36) of the respective reel (14).

3.  A reeling apparatus as claimed in Claim 2, wherein said drive means (60,62,64,66) comprises:

(a) a drive motor (60) on the carrier arm; and

(b) means (62,64,66) on the carrier arm (46) for transmitting the rotation of the drive motor (60) to the drive roll (50).

4.  A reeling apparatus as claimed in Claim 1, 2 or 3, wherein said reels (14) are rotatably mounted on a fixed shaft (30) on the carriage (10), and wherein said locking mechanism (18) comprises:

(a) a fixed gripping jaw (68) rigidly mounted in a fixed position with respect to the driving and braking mechanism (16);

(b) a movable gripping jaw (70) movable with respect to the fixed gripping jaw (68) and coacting therewith for gripping and releasing the fixed shaft (30) on which the reels (14) are mounted; and

(c) an actuator (82) for moving the movable gripping jaw (70) with respect to the fixed gripping jaw (68) so as to cause the jaws (68,70) to grip and release the fixed shaft (30).

5.  A reeling apparatus as claimed in any one of claims 1 to 4, wherein said fixed shaft (30) is upstanding on the carriage (10).

6.  A reeling apparatus as claimed in any one of Claims 1 to 5, wherein said carriage (10) is a handcart.

**Revendications**

1.  Appareil pour renvider une longue bande de matériau souple (F), comprenant:

(a) un montage de bobine (12) comprenant au moins une bobine (14) montée de façon tournante sur un support (10) et adaptée et disposée de manière que la bande de matériau (F) y soit enroulée;

(b) un mécanisme d'entraînement et de freinage (16) disposé à un endroit prédéterminé pour communiquer une rotation à la bobine (14) au nombre d'au moins une de manière que la bande de matériau (F) y soit enroulée, et pour arrêter la rotation de la bobine (14) au nombre d'au moins une à la fin de l'enroulement de la bande de matériau (F) sur cette dernière;

caractérisé en ce que:

(c) la bobine (14) au nombre d'au moins une du montage de bobine (12) comprenant une pluralité de bobines (14) montées coaxialement sous forme d'un empilement sur un axe (30) qui est fixé au support (10);

(d) le support (10) se présente sous la forme d'un chariot adapté pour être déplacé en vue de transporter les bobines (14) d'un endroit à un autre; et

(e) l'appareil comprend un mécanisme de verrouillage (18) pour venir porter de façon verrouillante contre ledit axe (30) de manière à maintenir l' axe (30) dans une position prédéterminée par rapport au mécanisme d'entraînement et de freinage (16) pour l'enroulement de la bande de matériau (F) sur lesdites bobines (14), le mécanisme de verrouillage (18) pouvant être libéré pour que le chariot soit déplacé vers un autre endroit dans un sens l'éloignant du mécanisme d'entraînement et de freinage (16).

2. Appareil de renvidage selon la revendication 1, dans lequel chacune des bobines (14) comprend un noyau cylindrique (34) monté sur le chariot en vue d'une rotation indépendante, et au moins une joue (36) formée sur le noyau cylindrique (34) en vue d'une rotation conjointe avec ce dernier, et dans lequel le mécanisme d'entraînement et de freinage (16) comprend:

(a) un moyen de support fixe (44);

(b) une pluralité de bras de support (46) articulés chacun en sa partie médiane sur le moyen de support (44) en vue d'une oscillation autour d'un axe parallèle à l'axe des bobines (14);

(c) un galet d'entraînement correspondant (50) monté sur une des extrémités de chaque bras de support (46) en vue d'une rotation autour d'un axe parallèle à l'axe des bobines (14), chaque galet d'entraînement (50) pouvant être déplacé de manière à venir en contact d'entraînement et hors de contact d'entraînement avec la périphérie de la joue (36) d'une bobine correspondante (14) grâce à l'oscillation du bras de support associé (46);

(d) un moyen d'entraînement (60, 62, 64, 66) pour communiquer une rotation à chaque galet d'entraînement (50);

(e) un frein correspondant (52) monté sur l'autre extrémité de chaque bras de support (46) en vue d'un déplacement pour revenir en contact de freinage et hors de contact de freinage avec la périphérie de la joue (36) d'une bobine correspondante (14) grâce à l'oscillation du bras de support associé (46);

(f) un actionneur (82) pour faire osciller chaque bras de support (46) par rapport au moyen de support (44) afin de déplacer le galet d'entraînement (50) et le frein (52) se trouvant sur chaque bras de support (46) de manière à l'amener en contact d'entraînement et de freinage et hors de contact d'entraînement et de freinage respectivement, avec la joue (36) de la bobine correspondante (14).

3. Appareil de renvidage selon la revendication 2, dans lequel le moyen d'entraînement (60, 62, 64, 66) comprend:

(a) un moteur d'entraînement (60) sur le bras de support, et

(b) un moyen (62, 64, 66) sur le bras de support (46) pour transmettre la rotation du moteur d'entraînement (60) au galet d'entraînement (50).

4. Appareil de renvidage selon la revendication 1, 2 ou 3, dans lequel les bobines (14) sont montées de façon tournante sur un axe fixe (30) se trouvant sur le chariot (10) et dans lequel le mécanisme de verrouillage (18) comprend:

(a) une mâchoire de serrage fixe (68) montée de façon rigide dans une position fixe par rapport au mécanisme d'entraînement et de freinage (16);

(b) une mâchoire de serrage mobile (70) pouvant être déplacée par rapport à la mâchoire de serrage fixe (68) et coopérant avec cette dernière pour serrer et relâcher l'axe fixe (30) sur lequel les bobines (14) sont montées; et

(c) un actionneur (82) pour déplacer la mâchoire de serrage mobile (70) par rapport à la mâchoire de serrage fixe (68) de manière que les mâchoires (68, 70) serrent et relâchent l'axe fixe (30).

5. Appareil de renvidage selon l'une quelconque des revendications 1 à 4, dans lequel l'axe fixe (30) est disposé verticalement sur le chariot (10).

6. Appareil de renvidage selon l'une quelconque des revendications 1 à 5, dans lequel le chariot (10) est un chariot à main.

## Patentansprüche

1. Vorrichtung zum Aufwickeln eines flexiblen, länglichen Bandmaterials (F), umfassend:

(a) eine Spulenbaugruppe (12), umfassend mindestens eine Spule (14), die auf einem Gestell (10) drehbar gelagert und zum Aufwickeln des Bandmaterials (F) ausgebildet und angeordnet ist;

(b) einen Antriebs- und Bremsmechanismus (16), der an einem vorbestimmten Ort angeordnet ist, um die mindestens eine Spule (14) zum Aufwickeln des Bandmaterials (F) auf dieselbe in Drehbewegung zu versetzen, und um die Drehbewegung der mindestens einen Spule (14) nach Beendigung des Aufwickelns des Bandmaterials (F) auf dieselbe zu beenden;

dadurch gekennzeichnet,

(c) daß die mindestens eine Spule (14) der Spulenbaugruppe (12) mehrere Spulen (14) umfaßt, die auf einem an dem Gestell (10) befestigten Schaft (30) in einem Stapel koaxial angeordnet sind;

(d) daß das Gestell (10) als Wagen ausgebildet ist, der zum Transport der Spulen (14) von einem Ort zu einem anderen verfahrbar ist; und

(e) daß die Vorrichtung einen Verriegelungsmechanismus (18) zum Verriegelungseingriff mit dem Schaft (30) umfaßt, um den Schaft (30) zum Aufwickeln des Bandmaterials (F) auf die Spulen (14) in Bezug auf den Antriebs- und Bremsmechanismus (16) in einer vorbestimmten Stellung zu halten, wobei der Verriegelungsmechanismus (18) ausrückbar ist, um den Wagen von dem Antriebs- und Bremsmechanismus (16) weg zu einem anderen Ort zu bewegen.

2. Aufwickelvorrichtung nach Anspruch 1, wobei jede der besagten Spulen (14) einen zylindrischen Kern (34) umfaßt, der auf dem Wagen zu einer unabhängigen Verdrehung gelagert ist, und mindestens einen Flansch (36) umfaßt, der mit dem zylindrischen Kern (34) drehfest verbunden ist, und wobei der Antriebs- und Bremsmechanismus (16) umfaßt:

(a) eine ortsfeste Stützeinrichtung (44),

(b) mehrere Trägerarme (46), die jeweils mittig an der Stützeinrichtung (44) um eine zur Achse der Spulen (14) parallele Achse schwenkbar gelagert sind;

(c) eine zugeordnete Antriebsrolle (50), die an einem Ende jedes Trägerarms (46) zu einer Verdrehung um eine zur Achse der Spulen (14) parallele Achse gelagert ist, wobei diese Antriebsrolle (50) durch die Verschwenkung des zugeordneten Trägerarms (46) mit dem Umfang des Flansches (36) der zugeordneten Spule (14) in und außer Antriebseingriff bringbar ist;

(d) Antriebsmittel (60,62,64,66) zum Verdrehen jeder Antriebsrolle (50);

(e) eine zugeordnete Bremse (52), die am anderen Ende jedes Trägerarms (46) angeordnet und durch die Verschwenkung des zugeordneten Trägerarms (46) mit dem Umfang des Flansches (36) der zugeordneten Spule (14) in und außer Bremseingriff bringbar ist; und

(f) eine Betätigungseinrichtung (82) zum Verschwenken jedes Trägerarms (46) gegenüber der Stützeinrichtung (44), um die Antriebsrolle (50) und die Bremse (52) auf jedem Trägerarm (46) mit dem Flansch (36) der zugeordneten Spule (14) in und außer Antriebs- bzw. Bremseingriff zu bringen.

3. Aufwickelvorrichtung nach Anspruch 2, wobei die Antriebsmittel (60,62,64,66) umfassen:

(a) einen Antriebsmotor (60) auf dem Trägerarm; und

(b) Mittel (62,64,66) auf dem Trägerarm (46) zum Übertragen der Drehbewegung des Antriebsmotors (60) auf die Antriebsrolle (50).

4. Aufwickelvorrichtung nach Anspruch 1, 2 oder 3, wobei die Spulen (14) auf einem festen Schaft (30) auf dem Wagen (10) drehbar gelagert sind, und wobei der Verriegelungsmechanismus (18) umfaßt:

(a) eine ortsfeste Klemmbacke (68), die in Bezug auf den Antriebs- und Bremsmechanismus (16) in einer ortsfesten Lage starr angeordnet ist;

(b) eine bewegliche Klemmbacke (70), die in Bezug auf die ortsfeste Klemmbacke (68) bewegbar ist und mit dieser zusammenwirken kann, um den festen Schaft (30), auf dem die Spulen (14) gelagert sind, einzuklemmen oder freizugeben; und

(c) eine Betätigungseinrichtung (82) zum Bewegen der beweglichen Klemmbacke (70) in Bezug auf die ortsfeste Klemmbacke (68), damit die Klemmbacken (68,70) den festen Schaft (30) einklemmen oder freigeben.

5. Aufwickelvorrichtung nach einem der Ansprüche 1 bis 4, wobei der feste Schaft (30) von dem Wagen (10) nach oben ragt.

6. Aufwickelvorrichtung nach einem der Ansprüche 1 bis 5, wobei der Wagen (10) ein Handkarren ist.

# F I G. 1

# F I G. 2

# FIG. 3

# FIG. 4

# FIG. 5